# EUROPEAN PATENT SPECIFICATION

(11) **EP 2 756 447 B1**
(45) Date of publication and mention of the grant of the patent: **25.05.2022**
(21) Application number: 12832563.6
(22) Date of filing: 06.01.2012
(51) Int. Cl.: G01V 99/00

(54) **SYSTEMS AND METHODS FOR ASSISTED PROPERTY MODELING**
SYSTEME UND VERFAHREN FÜR UNTERSTÜTZTE EIGENSCHAFTSMODELLIERUNG
SYSTÈMES ET PROCÉDÉS DE MODÉLISATION ASSISTÉE DE PROPRIÉTÉS

(30) Priority: 16.09.2011 US 201161535855 P
(43) Date of publication of application: 23.07.2014
(73) Proprietor: Landmark Graphics Corporation, Houston, TX 77042-3021 (US)
(72) Inventor: SHI, Genbao, Sugar Land, TX 77479 (US); YARUS, Jeffrey Marc, Houston, TX 77096 (US); CHAMBERS, Richard L., Bixby, OK 74008 (US); MAUCEC, Marko, Englewood, CO 80111 (US)
(74) Representative: Hoffmann Eitle
(86) International application number: PCT/US2012/020435
(87) International publication number: WO 2013/039558

(56) References cited:
- WO-A1-2009/151441
- US-A1- 2006 041 410
- US-A1- 2007 183 260
- US-A1- 2009 125 240
- US-A1- 2010 121 622
- US-A1- 2010 121 622
- ZHANG ET AL: "Incorporating Geological Conceptual Models and Interpretations into Reservoir Modeling Using Multiple-Point Geostatistics", EARTH SCIENCE FRONTIERS,, vol. 15, no. 1, 1 January 2008 (2008-01-01), pages 26-35, XP022634277, ISSN: 1872-5791, DOI: 10.1016/S1872-5791(08)60016-0 [retrieved on 2008-01-01]
- JEFF B BOISVERT ET AL: "Multiple-Point Statistics for Training Image Selection", NATURAL RESOURCES RESEARCH, KLUWER ACADEMIC PUBLISHERS-PLENUM PUBLISHERS, NE, vol. 16, no. 4, 31 January 2008 (2008-01-31), pages 313-321, XP019578902, ISSN: 1573-8981

## Description

### FIELD OF THE INVENTION

The present invention generally relates to assisted property modeling. More particularly, the invention relates to updating a property map during conditional simulation or unconditional simulation using interactive azimuth guidelines, user-defined well data (pseudo-wells) and/or variogram parameters.

### BACKGROUND OF THE INVENTION

Various systems and methods are known that offer the ability to integrate varying azimuthal data through the input of a vector grid and properties from well data.

These systems however, do not allow the user to interactively draw azimuth guidelines of any shape to rapidly create simple to complex vector fields, apply them to regionalized properties (petrophysical properties) and display them in a map view, honoring well data (conditional simulation or interpolation), or not honoring well data (unconditional simulation). In addition, these existing systems do not provide tools with a number of different underlying methods including kriging, conditional simulation, collocated cokriging and collocated cosimulation for both two-dimensional ("2-D") and three-dimensional ("3-D") operations.

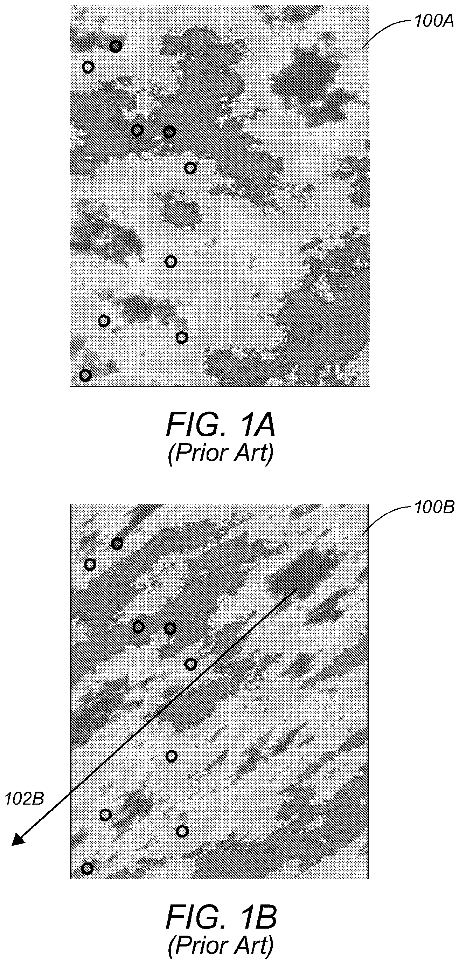

In operation, the prior art mapping systems and methods suffer from various limitations. For example, conventional mapping systems utilize algorithms assuming isotropy, and they rely on well data, seismic data, and geostatistics using a spatial model as illustrated by the property map **100A** in **FIG. 1A****.** The same mapping systems may also impose a single direction of continuity as illustrated by the single direction of continuity **102B** on the property map **100B** in **FIG. 1B****.**

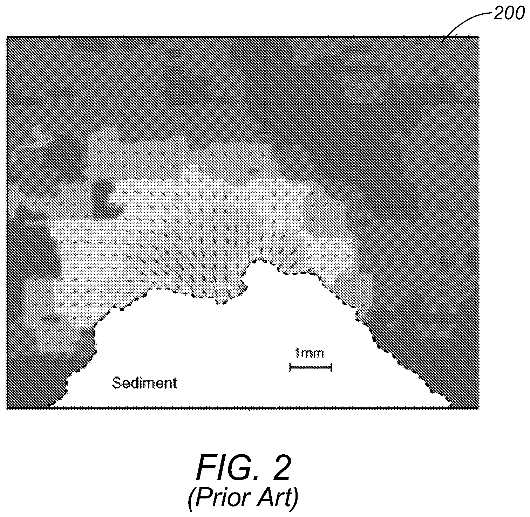

Vector input gives rise to various shortcomings. Mapping algorithms often fail to capture the complex directionality desired, or the trend maps used to guide the directionality are too limited. In particular, more complicated patterns are imposed by introducing second data via a "grid" or set of detailed inputs as illustrated by the property map **200** in **FIG. 2****.** The resulting product becomes difficult and time-consuming to construct and edit and is rigid and inflexible. Changes require new grids, which also take time to construct. Alternatively, if painting, then painting patterns do not allow for internal changes in continuity directions local to the object painted.

US 2010/121622 A1 discloses a system and method for computing a variogram model from a variogram map and a rose diagram.

WO 2009/151441 A1 also discloses a system and method for computing a variogram model from a map, wherein the direction of maximum continuity for a selected geophysical property is taken into account, e.g. from user input.

US2003/182093 A1 relates to a computer-implemented method of generating geologic models in which lithological and petrophysical properties are modeled with orientations of coninuity that are consistent with depositional features. The thalwegs that describe spatial variations of continuity for the features of interest may be generated by a computer or defined manually.

US2004/122634 A1 discloses a system and method for geologic modeling. A tentative initial model is generated and then updated: a grid is established wherein a local orientation of maximum continuity is applied per grid cell.

### SUMMARY OF THE INVENTION

The present invention therefore, meets the above needs and overcomes one or more deficiencies in the prior art by providing systems and methods for updating a property map during conditional simulation or unconditional simulation using interactive azimuth guidelines, user-defined well data (pseudo-wells) and/or variogram parameters.

According to a first aspect of the invention, there is provided a computer-implemented method for updating a property map according to claim 1.

According to a second aspect of the invention, there is provided a non-transitory program carrier device tangibly carrying computer executable instructions for updating a property map during a simulation according to claim 5.

Additional aspects, advantages and embodiments of the invention will become apparent to those skilled in the art from the following description of the various embodiments and related drawings.

### BRIEF DESCRIPTION OF THE DRAWINGS

The present invention is described below with references to the accompanying drawings in which like elements are referenced with like reference numerals, and in which:
**FIG. 1A** illustrates a property map using variogram parameters without a global azimuth or anisotropy ratio.
**FIG. 1B** illustrates the property map in **FIG. 1A** using variogram parameters with a global azimuth or anisotropy ratio.
**FIG. 2** illustrates a property map with multiple azimuths.
**FIG. 3** is a flow diagram illustrating one embodiment of a method for implementing the present invention.
**FIG. 4A** illustrates azimuth guidelines drawn on the property map in **FIG. 2** as a result of step **320** in **FIG. 3****.**
**FIG. 4B** illustrates an updated display of the property map in **FIG. 4A** as a result of step **326** in **FIG. 3****.**
**FIG. 5** illustrates an updated display of the property map in **FIG. 1B** as a result of step **326** in **FIG. 3** after the addition of four azimuth guidelines.
**FIG. 6** illustrates an updated display of the property map in **FIG. 5** as a result of step **326** in **FIG. 3** after the addition of three well user-defined well data points.
**FIG. 7** illustrates an updated display of the property map in **FIG. 1B** as a result of step **326** in **FIG. 3** after the addition of four azimuth guidelines and one user-defined well data point.
**FIG. 8** illustrates an updated display of the property map in **FIG. 1B** as a result of step **326** in **FIG. 3** after the addition of a single azimuth guideline and multiple user-defined well data points.
**FIG. 9** is a block diagram illustrating one embodiment of a system for implementing the present invention.

### DETAILED DESCRIPTION OF THE PREFERRED EMBODIMENTS

The subject matter of the present invention is described with specificity, however, the description itself is not intended to limit the scope of the invention. The subject matter thus, might also be embodied in other ways, to include different steps or combinations of steps similar to the ones described herein, in conjunction with other present or future technologies. Moreover, although the term "step" may be used herein to describe different elements of methods employed, the term should not be interpreted as implying any particular order among or between various steps herein disclosed unless otherwise expressly limited by the description to a particular order. While the present invention may be applied in the oil and gas industry, it is not limited thereto and may also be applied in other industries to achieve similar results.

The present invention does away with the need to provide static input, a fixed grid or lattice, for the purpose of identifying specific vector information at a given x,y,z, location. The information is provided in order to allow the directionality of property continuities to vary with distance over the model area. This has historically been a tedious operation requiring advanced preparation and repetition each time the user changed the underlying vector field. The present invention, instead, provides the user with a graphic interface that allows directional patterns to be sketched on the interface causing the underlying vector field to conform. In other words, a new data set may be created by drawing one or more lines (vectors) with a user input device, such as a mouse, tablet, or, in the case of touch-sensitive media - a finger. The result is displayed as a property map where the directional continuities precisely follow the sketched patterns and wherein the image can be refreshed and redrawn rapidly, if not instantly. Moreover, the pseudo-well control points may be added to further constrain the underlying patterns or test the effect of the simulation on the potential drill site.

The present invention may be implemented directly on any user-computing device, including an iPad^{®}, through an application program interface or cloud computing.

### Method Description

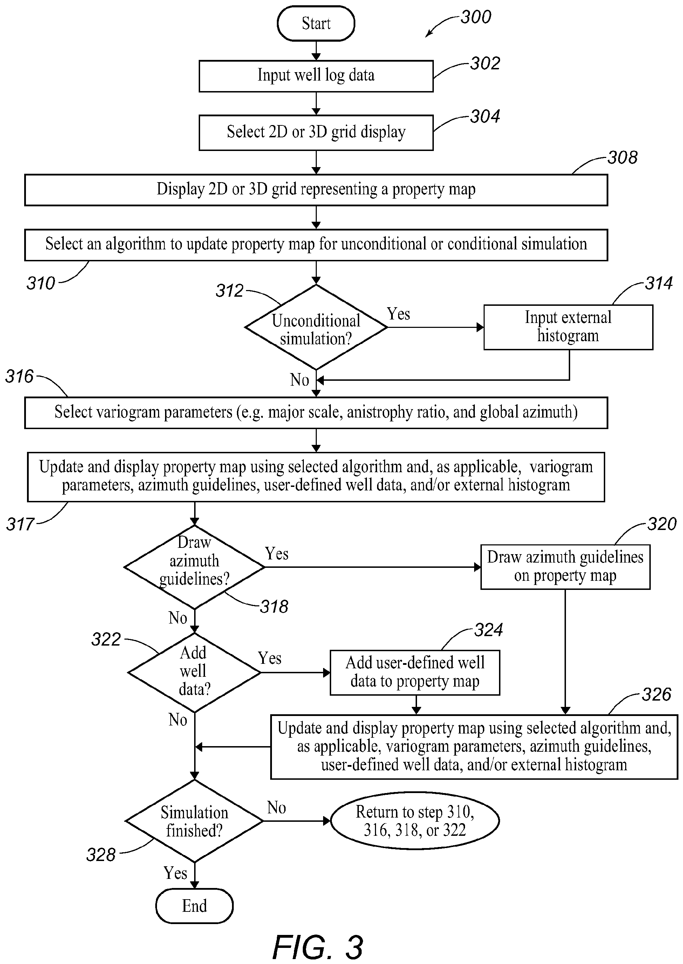

Referring now to **FIG. 3****,** a flow diagram illustrates one embodiment of a method **300** for implementing the present invention.

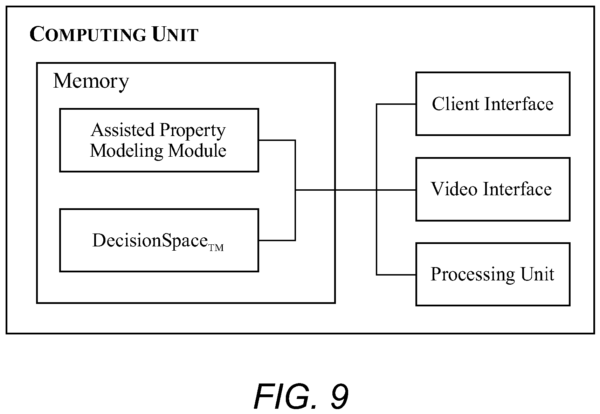

In step **302,** well log data is input, which may include porosity, permeability and/or facies, with well control points, using the client interface and/or the video interface described in reference to **FIG. 9****.**

In step **304,** a 2D or 3D grid display is selected for displaying the well log data using the client interface and/or the video interface described in reference to **FIG. 9****.** Exemplary displays may include a 2D grid display of a surface or a 3D grid display of a reservoir.

In step **308,** the 2D or 3D grid is displayed as a property map using techniques well known in the art and/or the video interface described in reference to **FIG. 9****.**

In step **310,** an algorithm is selected to update the property map for conditional simulation using the client interface and/or the video interface described in reference to **FIG. 9****.** Selection of the algorithm may be based on a subjective determination of the type of simulation preferred, including whether kriging, co-kriging or collocated co-kriging are preferred for conditional simulation. The algorithm conditions the simulation to the well log data thus, honoring the well log data in the conditional simulation.

In an unclaimed alternative for step **312,** the method **300** determines if the algorithm selected in step **310** is for unconditional simulation. If the algorithm selected in step **310** is not for unconditional simulation, then the method **300** proceeds to step **316.** If the algorithm selected in step **310** is for the unclaimed alternative of unconditional simulation, then the method **300** proceeds to step **314.**

In step **314,** an external histogram is input using the client interface and/or the video interface described in reference to **FIG. 9****.**

In step **316,** variogram parameters are selected using the client interface and/or the video interface described in reference to **FIG. 9****.** The parameters may include a major scale, an anisotrophy ratio, and a global azimuth for the variogram. The parameters may be selected by use of an existing variogram, modification of an existing variogram, or selection of new variogram parameters.

In step **317,** the property map is automatically updated and displayed using the algorithm selected in step **310** and, as applicable, the variogram parameters selected in step **316,** the azimuth guidelines drawn in step **320,** the user-defined well data added during step **324** and/or, in an unclaimed alternative, the external histogram input during step **314.** During the first iteration of the method **300,** step **317** updates and displays the property map using only the algorithm selected in step **310,** the variogram parameters selected in step **316** and in an unclaimed alternative, also the external histogram input during step **314** (for only unconditional simulation). During subsequent iterations of the method **300,** step **317** updates and displays the property map using the algorithm selected in step **310,** the variogram parameters selected in step **316**, the azimuth guidelines drawn in step **320** and the user-defined well data, if any, added during step **324.**

In some examples disclosed herein, in step **318,** the method **300** determines if azimuth guidelines are preferred based upon the results of the property map displayed in step 317. If azimuth guidelines are not preferred, then the method **300** proceeds to step **322.** If azimuth guidelines are preferred, then the method **300** proceeds to step **320.** According to the present invention, the method proceeds to step 320.

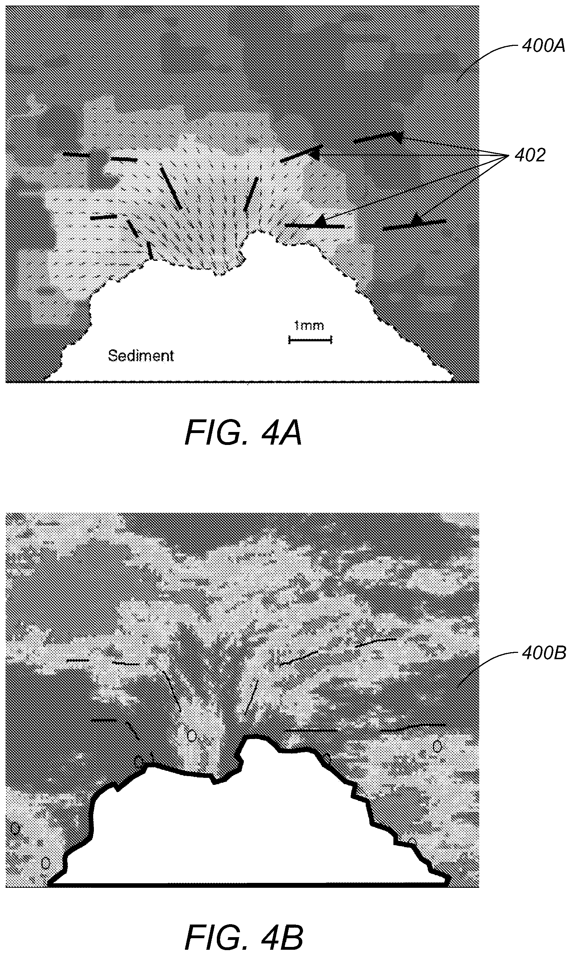

In step **320,** azimuth guidelines are drawn on the property map displayed in step 317 using the client interface and/or the video interface described in reference to **FIG. 9****.** In **FIG. 4A****,** the property map **400A** illustrates azimuth guidelines **402** that were drawn on the property map in **FIG. 2** as a result of this step. Each azimuth guideline may be curvilinear, which imposes directionality.

In step **322,** the method **300** determines if user-defined well data is preferred based on the results of the property map displayed in step **317.** If user-defined well data is not preferred, then the method **300** proceeds to step **328**. If user-defined well data is preferred, then the method **300** proceeds to step **324.**

In step **324**, user-defined well data is added to the property map displayed in step **317** using the client interface and/or the video interface described in reference to **FIG. 9**.

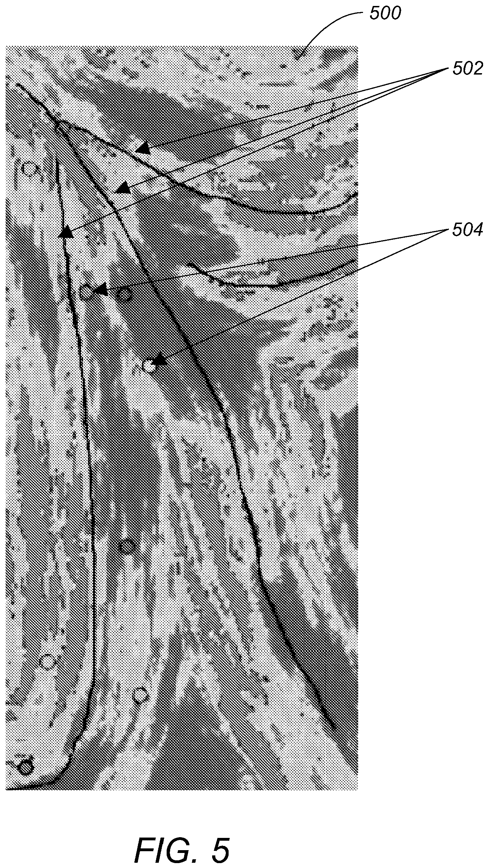

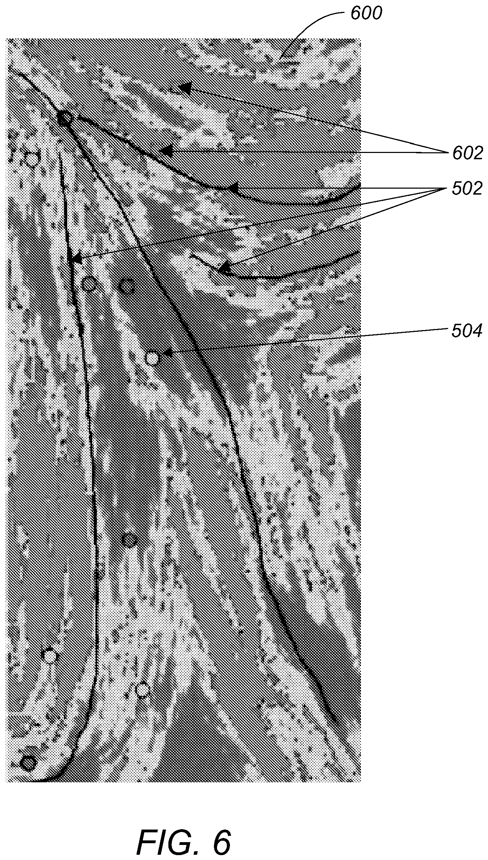

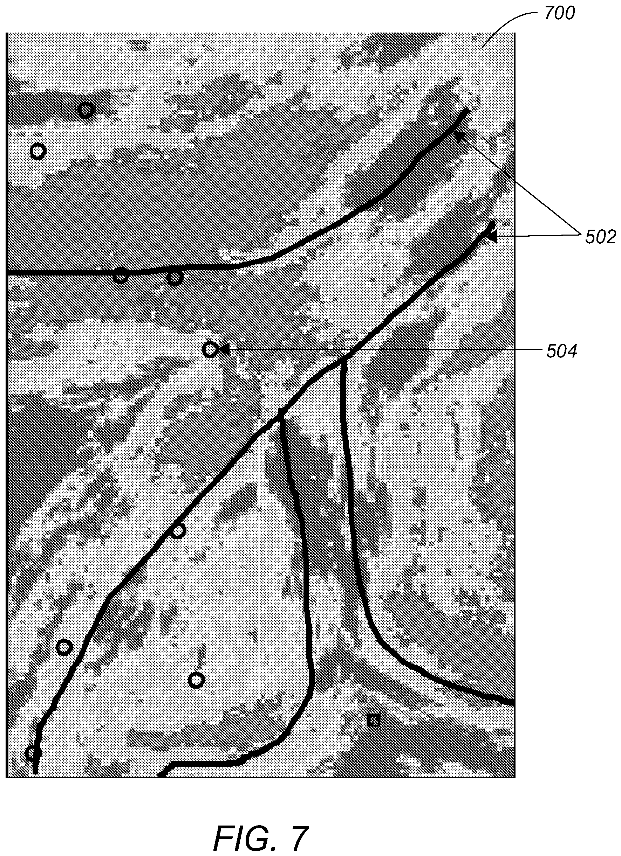

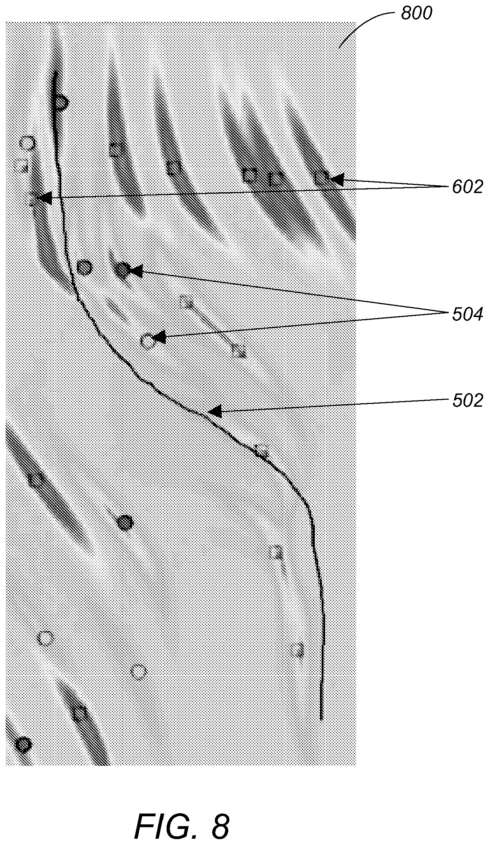

In step **326**, the property map displayed in step **317** is automatically updated and displayed using the algorithm selected in step **310** and, as applicable, the variogram parameters selected in step **316**, the external histogram input during step **314** (for only unconditional simulation), the azimuth guidelines, if any, drawn in step **320** and the user-defined well data, if any, added during step **324.** In **FIG. 4B****,** the property map **400B** illustrates an updated display of the property map in **FIG. 4A** as a result of this step. In **FIG. 5****,** the property map **500** illustrates an updated display of the property map in **FIG. 1B** having multiple pre-existing well data points **504** as a result of this step after the addition of four azimuth guidelines **502** during step **320.** In **FIG. 6****,** the property map **600** illustrates an updated display of the property map in **FIG. 5** as a result of this step after the addition of three user-defined well data points **602** during step **324.** In **FIG. 7****,** the property map **700** illustrates an updated display of the property map in **FIG. 1B** as a result of this step after the addition of four azimuth guidelines **502** during step **320** and one user-defined well data point **602** during step **324.** In **FIG. 8****,** the property map **800** illustrates an updated display of the property map in **FIG. 1B** as a result of this step after the addition of a single azimuth guideline **502** during step **320** and multiple user-defined well data points **602** during step **324.** Thus, the method **300** automatically creates simple to complex vector fields, applies them to regionalized properties (petrophysical properties) and displays them in a map view - regardless of the algorithm selected.

In step **328,** the method **300** determines if the simulation is finished based upon the results of the property map displayed in steps **317** or **326.** If the property map displayed in steps **317** or **326** is acceptable for its intended use, then the simulation may be finished and the method **300** ends. If the property map displayed in steps **317** or **326** is not acceptable for its intended use, then the simulation may not be finished and the method **300** returns to steps **310, 316**, **318** or **322.** Depending on the results of the property map displayed in steps **317** or **326,** the method 300 may be directed by the user to steps **310, 316, 318** or **322.**

### System Description

The present invention may be implemented through a computer-executable program of instructions, such as program modules, generally referred to software applications or application programs executed by a computer. The software may include, for example, routines, programs, objects, components, data structures, etc., that perform particular tasks or implement particular abstract data types. DecisionSpace^{™}, which is a commercial software application marketed by Landmark Graphics Corporation, may be used as an interface application to implement the present invention. The software may also cooperate with other code segments to initiate a variety of tasks in response to data received in conjunction with the source of the received data. The software may be stored and/or carried on any variety of memory such as CD-ROM, magnetic disk, bubble memory and semiconductor memory (e.g., various types of RAM or ROM). Furthermore, the software and its results may be transmitted over a variety of carrier media such as optical fiber, metallic wire, and/or through any of a variety of networks, such as the Internet.

Moreover, those skilled in the art will appreciate that the invention may be practiced with a variety of computer-system configurations, including hand-held devices, multiprocessor systems, microprocessor-based or programmable-consumer electronics, minicomputers, mainframe computers, and the like. Any number of computer-systems and computer networks are acceptable for use with the present invention. The invention may be practiced in distributed-computing environments where tasks are performed by remote-processing devices that are linked through a communications network. In a distributed-computing environment, program modules may be located in both local and remote computer-storage media including memory storage devices. The present invention may therefore, be implemented in connection with various hardware, software or a combination thereof, in a computer system or other processing system.

Referring now to **FIG. 9**, a block diagram illustrates one embodiment of a system for implementing the present invention on a computer. The system includes a computing unit, sometimes referred to as a computing system, which contains memory, application programs, a client interface, a video interface, and a processing unit. The computing unit is only one example of a suitable computing environment and is not intended to suggest any limitation as to the scope of use or functionality of the invention.

The memory primarily stores the application programs, which may also be described as program modules containing computer-executable instructions, executed by the computing unit for implementing the present invention described herein and illustrated in **FIG. 3**. The memory therefore, includes an assisted property modeling module, which enables the methods illustrated and described in reference to **FIG. 3** and integrates functionality from the remaining application programs illustrated in **FIG. 9**. The assisted property modeling module, for example, may be used to execute many of the functions described in reference to steps **312**, **314**, **316**, **317**, **318**, **320**, **322**, **324**, **326**, and **328** in **FIG. 3**. Decision Space^{™} may be used, for example, to execute the functions described in reference to steps **302, 304, 308,** and **310** in **FIG.** 3.

Although the computing unit is shown as having a generalized memory, the computing unit typically includes a variety of computer readable media. By way of example, and not limitation, computer readable media may comprise computer storage media The computing system memory may include computer storage media in the form of volatile and/or nonvolatile memory such as a read only memory (ROM) and random access memory (RAM). A basic input/output system (BIOS), containing the basic routines that help to transfer information between elements within the computing unit, such as during start-up, is typically stored in ROM. The RAM typically contains data and/or program modules that are immediately accessible to and/or presently being operated on by the processing unit. By way of example, and not limitation, the computing unit includes an operating system, application programs, other program modules, and program data.

The components shown in the memory may also be included in other removable/non-removable, volatile/nonvolatile computer storage media or they may be implemented in the computing unit through an application program interface ("API"), which may reside on a separate computing unit connected through a computer system or network. For example only, a hard disk drive may read from or write to non-removable, nonvolatile magnetic media, a magnetic disk drive may read from or write to a removable, non-volatile magnetic disk, and an optical disk drive may read from or write to a removable, nonvolatile optical disk such as a CD ROM or other optical media. Other removable/non-removable, volatile/non-volatile computer storage media that can be used in the exemplary operating environment may include, but are not limited to, magnetic tape cassettes, flash memory cards, digital versatile disks, digital video tape, solid state RAM, solid state ROM, and the like. The drives and their associated computer storage media discussed above provide storage of computer readable instructions, data structures, program modules and other data for the computing unit.

A client may enter commands and information into the computing unit through the client interface, which may be input devices such as a keyboard and pointing device, commonly referred to as a mouse, trackball or touch pad. Input devices may include a microphone, joystick, satellite dish, scanner, or the like. These and other input devices are often connected to the processing unit through a system bus, but may be connected by other interface and bus structures, such as a parallel port or a universal serial bus (USB).

A monitor or other type of display device may be connected to the system bus via an interface, such as a video interface. A graphical user interface ("GUI") may also be used with the video interface to receive instructions from the client interface and transmit instructions to the processing unit. In addition to the monitor, computers may also include other peripheral output devices such as speakers and printer, which may be connected through an output peripheral interface.

Although many other internal components of the computing unit are not shown, those of ordinary skill in the art will appreciate that such components and their interconnection are well known.

While the present invention has been described in connection with presently preferred embodiments, it will be understood by those skilled in the art that it is not intended to limit the invention to those embodiments. The scope of the invention is defined by the appended claims.

## Claims

1. A computer-implemented method for updating a property map (100A, 100B, 200) during a simulation, which comprises:
inputting (302), using a client and/or video interface, well log data;
selecting (304), using the client and/or video interface, a 2D or 3D grid display for displaying the well log data;
displaying (308) the 2D or 3D grid display as a property map (100A, 100B, 200);
receiving, through an input device forming part of a graphical user interface, a selection (310) of an algorithm to update the property map based on a selection (312) to honor the well log data (504, 602) for a plurality of wells;
receiving, through the input device, a selection (316) of a variogram parameter to update the property map;
updating (317) the property map using the algorithm and the variogram parameter, the updated property map representing a new property map (400A);
rendering (317) an image of the new property map in a display device forming part of the graphical user interface;
obtaining, through the graphical user interface, a plurality of sketched (320) azimuth guidelines (402, 502) placed on the new property map by drawing on the graphical user interface, the azimuth guidelines indicating one or more directional continuities of the property map;
updating (326) the new property map using the algorithm, the variogram parameter, the plurality of sketched azimuth guidelines, and user-defined well data to produce an updated new property map (400B, 500, 600, 700, 800), such that the directional continuities of the updated new property map follow the plurality of sketched azimuth guidelines; and
rendering (326) an image of the updated new property map in the graphical user interface on the display device.

2. The method of claim 1, further comprising repeatedly obtaining at least one sketched azimuth guideline (402, 502) placed on the updated new property map as the new property map (400A) by drawing on the graphical user interface and repeating the updating of the new property map (400A) and the rendering of the image of the updated new property map (400B, 500, 600, 700, 800) until the simulation is finished.

3. The method of claim 2, further comprising rendering (304, 308) an image of a two-dimensional grid or a three-dimensional grid representing the property map (100A, 100B, 200).

4. The method of claim 1 wherein the variogram parameter includes major scale, anistrophy ratio, or global azimuth.

5. A non-transitory program carrier device tangibly carrying computer executable instructions for updating a property map (100A, 100B, 200) during a simulation, the instructions being executable to implement a method according to any one of Claims 1 to 4.

## Patentansprüche

1. Computerimplementiertes Verfahren zum Aktualisieren einer Eigenschaftskarte (100A, 100B, 200) während einer Simulation, das Folgendes umfasst:
Eingeben (302) von Bohrlochlogdaten unter Verwendung einer Client- und/oder Videoschnittstelle;
Auswählen (304) unter Verwendung der Client- und/oder Videoschnittstelle einer 2D- oder 3D-Gitteranzeige zum Anzeigen der Bohrlochlogdaten;
Anzeigen (308) der 2D- oder 3D-Gitteranzeige als Eigenschaftskarte (100A, 100B, 200);
Empfangen einer Auswahl (310) eines Algorithmus über eine Eingabevorrichtung, die Teil einer grafischen Benutzerschnittstelle ist, zum Aktualisieren der Eigenschaftskarte basierend auf einer Auswahl (312), um die Bohrlochlogdaten (504, 602) für eine Vielzahl von Bohrlöchern zu berücksichtigen;
Empfangen einer Auswahl (316) eines Variogrammparameters durch die Eingabevorrichtung, um die Eigenschaftskarte zu aktualisieren;
Aktualisieren (317) der Eigenschaftskarte unter Verwendung des Algorithmus und des Variogrammparameters, wobei die aktualisierte Eigenschaftskarte eine neue Eigenschaftskarte (400A) darstellt;
Rendern (317) eines Bildes der neuen Eigenschaftskarte in einer Anzeigevorrichtung, die einen Teil der grafischen Benutzerschnittstelle bildet;
Erhalten einer Vielzahl von skizzierten (320) Azimutleitlinien (402, 502), die auf der neuen Eigenschaftskarte platziert sind, über die grafische Benutzerschnittstelle durch Zeichnen auf der grafischen Benutzerschnittstelle, wobei die Azimutleitlinien eine oder mehrere Richtungskontinuitäten der Eigenschaftskarte angeben;
Aktualisieren (326) der neuen Eigenschaftskarte unter Verwendung des Algorithmus, des Variogrammparameters,
der Vielzahl von skizzierten Azimutrichtlinien und
benutzerdefinierter Bohrlochdaten, um eine aktualisierte neue Eigenschaftskarte (400B, 500, 600, 700, 800) zu erzeugen, so dass die Richtungskontinuitäten der aktualisierten neuen Eigenschaftskarte der Vielzahl von skizzierten AzimutRichtlinien folgen; und
Rendern (326) eines Bildes der aktualisierten neuen Eigenschaftskarte in der grafischen Benutzerschnittstelle auf der Anzeigevorrichtung.

2. Verfahren nach Anspruch 1, ferner umfassend das wiederholte Erhalten mindestens einer skizzierten Azimutleitlinie (402, 502), die auf der aktualisierten neuen Eigenschaftskarte als die neue Eigenschaftskarte (400A) platziert ist, durch Zeichnen auf der grafischen Benutzerschnittstelle und Wiederholen der Aktualisierung der neuen Eigenschaftskarte (400A) und der Wiedergabe des Bildes der aktualisierten neuen Eigenschaftskarte (400B, 500, 600, 700, 800) bis die Simulation beendet ist.

3. Verfahren nach Anspruch 2, ferner umfassend das Rendern (304, 308) eines Bildes eines zweidimensionalen Gitters oder eines dreidimensionalen Gitters, das die Eigenschaftskarte (100A, 100B, 200) darstellt.

4. Verfahren nach Anspruch 1, wobei der Variogrammparameter die Hauptskala, das Anistrophieverhältnis oder den globalen Azimut umfasst.

5. Nichtflüchtige Programmträgervorrichtung, die greifbar computerausführbare Anweisungen zum Aktualisieren einer Eigenschaftskarte (100A, 100B, 200) während einer Simulation trägt, wobei die Anweisungen ausführbar sind, um ein Verfahren nach einem der Ansprüche 1 bis 4 zu implementieren.

## Revendications

1. Procédé mis en œuvre par ordinateur pour mettre à jour une carte de propriétés (100A, 100B, 200) pendant une simulation, qui comprend :
la saisie (302), à l'aide d'une interface client et/ou vidéo, de données de diagraphie de puits ;
la sélection (304), à l'aide de l'interface client et/ou vidéo, d'un affichage de grille 2D ou 3D pour afficher les données de diagraphie de puits ;
l'affichage (308) de l'affichage de grille 2D ou 3D sous la forme d'une carte de propriétés (100A, 100B, 200) ;
la réception, par l'intermédiaire d'un dispositif d'entrée faisant partie d'une interface utilisateur graphique, d'une sélection (310) d'un algorithme pour mettre à jour la carte de propriétés sur la base d'une sélection (312) pour honorer les données de diagraphie de puits (504, 602) pour une pluralité de puits ;
la réception, par l'intermédiaire du dispositif d'entrée, d'une sélection (316) d'un paramètre de variogramme pour mettre à jour la carte de propriétés ;
la mise à jour (317) de la carte de propriétés à l'aide de l'algorithme et du paramètre de variogramme, la carte de propriétés mise à jour représentant une nouvelle carte de propriétés (400A) ;
la restitution (317) d'une image de la nouvelle carte de propriétés dans un dispositif d'affichage faisant partie de l'interface utilisateur graphique ;
l'obtention, par l'intermédiaire de l'interface utilisateur graphique, d'une pluralité de lignes directrices d'azimut (402, 502) esquissées (320) placées sur la nouvelle carte de propriétés en dessinant sur l'interface utilisateur graphique, les lignes directrices d'azimut indiquant une ou plusieurs continuités directionnelles de la carte de propriétés ;
la mise à jour (326) de la nouvelle carte de propriétés à l'aide de l'algorithme, du paramètre de variogramme, de la pluralité de lignes directrices d'azimut esquissées et des données de puits définies par l'utilisateur pour produire une nouvelle carte de propriété mise à jour (400B, 500, 600, 700, 800), de sorte que les continuités directionnelles de la nouvelle carte de propriété mise à jour suivent la pluralité de lignes directrices d'azimut esquissées ; et
la restitution (326) d'une image de la nouvelle carte de propriétés mise à jour dans l'interface utilisateur graphique sur le dispositif d'affichage.

2. Procédé selon la revendication 1, comprenant en outre l'obtention répétée d'au moins une ligne directrice d'azimut esquissée (402, 502) placée sur la nouvelle carte de propriété mise à jour en tant que nouvelle carte de propriété (400A) en dessinant sur l'interface utilisateur graphique et en répétant la mise à jour de la nouvelle carte de propriétés (400A) et la restitution de l'image de la nouvelle carte de propriétés mise à jour (400B, 500, 600, 700, 800) jusqu'à ce que la simulation soit terminée.

3. Procédé selon la revendication 2, comprenant en outre la restitution (304, 308) d'une image d'une grille bidimensionnelle ou d'une grille tridimensionnelle représentant la carte de propriétés (100A, 100B, 200).

4. Procédé selon la revendication 1, dans lequel le paramètre de variogramme comporte une échelle majeure, un rapport d'anistrophie ou un azimut global.

5. Dispositif porteur de programme non transitoire portant de manière tangible des instructions exécutables par ordinateur pour mettre à jour une carte de propriétés (100A, 100B, 200) pendant une simulation, les instructions étant exécutables pour mettre en œuvre un procédé selon l'une quelconque des revendications 1 à 4.
